# EUROPÄISCHE PATENTSCHRIFT

(11) **EP 1 049 532 B1**
(45) Veröffentlichungstag und Bekanntmachung des Hinweises auf die Patenterteilung: **17.04.2002**
(21) Anmeldenummer: 99910097.7
(22) Anmeldetag: 28.01.1999
(51) Int. Cl.: B01J 2/12, B01F 5/00, B01J 2/00

(54) **TROMMELCOATER MIT ZWANGSRÜCKFÜHRUNG DES GUTES**
DRUM COATER WITH FORCED RECIRCULATION OF THE MATERIAL
MACHINE A ENDUIRE A TAMBOUR AVEC RECYCLAGE FORCE DU MATERIAU A ENDUIRE

(30) Priorität: 28.01.1998 DE 19803113
(43) Veröffentlichungstag der Anmeldung: 08.11.2000
(60) Teilanmeldung: 00115874.0
(73) Patentinhaber: L.B. Bohle Maschinen + Verfahren GmbH, 59320 Ennigerloh (DE)
(72) Erfinder: BOHLE, Lorenz, Bernhard, D-59320 Ennigerloh (DE)
(74) Vertreter: Habbel, Hans-Georg, Dipl.-Ing.
(86) Internationale Anmeldenummer: DE9900236
(87) Internationale Veröffentlichungsnummer: WO9938607

(56) Entgegenhaltungen:
- EP-A- 0 744 212
- FR-A- 1 459 246
- GB-A- 2 060 421

## Beschreibung

Die Erfindung betrifft eine Vorrichtung nach dem Oberbegriff des Anspruches 1.

Eine derartige Vorrichtung ist aus der EP-A- 0 744 212 bekannt

Bei der bekannten Vorrichtung ist im praktischen Betrieb, insbesondere bei der Beschichtung oblong geformter Gegenstände nicht auszuschließen, daß diese Gegenstände, die häufig geradlinige Seitenflächen aufweisen, über eine längere Linie oder sogar über eine größere Fläche miteinander Kontakt haben. Bei der Umwälzbewegung des Gutes innerhalb der Trommel kann die flüssig aufgetragene Beschichtung bei einem derartig intensiven Kontakt zweier benachbarter Gegenstände zu deren Verklebung führen, insbesondere, da sich in der Praxis häufig innerhalb des umgewälzten Gutes eine "tote Zone" in der Mitte des Gutes ausbildet, innerhalb der die Gegenstände kaum bewegt werden. Um diesen Bereich zu minimieren, ist bei der bekannten Vorrichtung die Trommel mit einer axialen Länge ausgestaltet, die größer ist als es dem Durchmesser der Trommel entspricht, so daß insgesamt ein länglicher Zylinder geschaffen wird. Durch diese längliche Ausgestaltung verteilt sich das Gut über eine größere Länge des Zylinders, so daß das umgewälzte Bett des Gutes eine kleinere "tote Zone" in seinem Inneren aufweist.

Aus der FR-A-1 459 246 ist eine Beschichtungsvorrichtung bekannt, deren Trommel erste Mitnehmer aufweist, welche dem Gut keinen Vorschub in axialer Richtung der Trommel vermitteln, also keine Axialförderung bewirken, sondern das Gut ausschließlich quer zur Trommelachse in einer Drehbewegung um die Trommelachse fördern, also in Form einer Umwälzung oder Zirkumferentförderung. Zweite Mitnehmer sind von der Trommelwandung nach innen beabstandet vorgesehen und bewirken eine Axialförderung des Gutes innerhalb der Trommel in Trommellängsrichtung. Da die Trommel horizontal angeordnet ist, wird die Axialförderung des zu beschichtenden Gutes ausschließlich durch diese zweiten Mitnehmer bewirkt.

Der Erfindung liegt die Aufgabe zugrunde, eine gattungsgemäße Vorrichtung dahingehend zu verbessern, daß diese eine möglichst vollständige Umwälzung des Gutes sicherstellt.

Diese der Erfindung zugrundeliegende Aufgabe wird durch eine Vorrichtung mit den Merkmalen des Anspruches 1 gelöst.

Die Erfindung schlägt mit anderen Worten vor, zusätzlich zu den gattungsgemäß bekannten, innen am Trommelumfang anliegenden ersten Mitnehmem, die das Gut entlang der Trommellängsachse in einer Richtung fördern, entgegengesetzt wirkende zweite Mitnehmer vorzusehen, die nicht abwechselnd mit den ersten Mitnehmern angeordnet, sondern radial versetzt angeordnet sind, beispielsweise weiter zum Trommelinneren. Indem diese Mitnehmer auf Stegen gegenüber der Trommelwandung aufgeständert sind, kann das Gut unter diesen zweiten Mitnehmem entlang der Trommelwandung durch die ersten Mitnehmer gefördert werden. Die Bereiche des Gutbettes mit einer größeren Schichtdicke werden allerdings von den zweiten Mitnehmem erfaßt und da diese zweiten Mitnehmer entgegengesetzt zu den ersten Mitnehmern wirken, wird eine intensivere Durchmischung des Gutbettes bewirkt, so daß eine "tote Zone" minimiert und je nach Geometrie der Mitnehmer und der Trommel in einem praktischen Ausmaß regelrecht ausgeschlossen werden kann, nämlich dann, wenn die Beschichtungsergebnisse keine miteinander verklebten Gegenstände ergeben.

Als Zylinder werden im Sinne dieser Erfindung nicht nur Trommelformen mit rundem Querschnitt, sondern auch mit mehreckigem, beispielsweise achteckigem Querschnitt bezeichnet.

Vorteilhaft kann vorgesehen sein, die Trommel schnell entnehmbar in der Vorrichtung zu lagem. Auf diese Weise können auch beim Betrieb der Vorrichtung mit nur einer einzigen Trommel hohe Anlagenverfügbarkeiten sichergestellt werden, indem nämlich eine verschmutzte Trommel selbst bei erheblichem Reinigungsaufwand und dementsprechend großen Zeitbedarf gegen eine gereinigte Trommel innerhalb kurzer Zeit ausgetauscht werden kann. Die Reinigungszeiten entsprechen daher bei vergleichsweise geringem finanziellen Aufwand durch die Anschaffung einer einzigen Ersatztrommel nicht den Ausfallzeiten der gesamten Vorrichtung, so daß die Vorrichtung insgesamt mit erheblich verbesserter Wirtschaftlichkeit betrieben werden kann.

Vorteilhaft kann vorgesehen sein, die Trommel um ihre Längsachse kippbeweglich zu lagern, so daß sie in einer Schräganordnung betrieben werden kann. Auf diese Weise wird automatisch sichergestellt, daß die Gegenstände im Inneren der Trommel optimal durchgemischt und immer wieder von den Mitnehmern erfaßt und durcheinander bewegt werden.

Vorteilhaft können die ersten, aufwärtsfördernden Mitnehmer bei einem derartigen schrägstehenden Betrieb der Trommel entlang der Trommelwandung in an sich bekannter Weise angeordnet sein, während die zweiten, gegenläufig fördernden Mitnehmer gegenüber der Trommelwandung aufgeständert und dementsprechend radial weiter innen vorgesehen sind. Auf diese Weise kann die Trommel in an sich bekannter Weise preisgünstig ausgestaltet sein und mit geringem finanziellen Aufwand auf die zweiten Mitnehmer nachgerüstet werden.

Bei entsprechenden räumlichen Voraussetzungen kann die Vorrichtung vorteilhaft mehrere Trommeln aufweisen, die hintereinandergeschaltet arbeiten, so daß die einzelnen Beschichtungsschritte nacheinander in einer jeweils dafür spezialisierten Trommel ablaufen können. Auf diese Weise können in den einzelnen Trommel optimale Behandlungsbedingungen eingestellt werden; der Verschmutzungsgrad der einzelnen Trommeln kann dementsprechend gesenkt werden.

Ein Ausführungsbeispiel der Erfindung wird anhand der Zeichnungen im folgenden näher erläutert. Dabei zeigt
- Fig. 1: eine perspektivische Ansicht auf eine Vorrichtung mit geschlossener Abdeckhaube,
- Fig. 2: die Vorrichtung von Fig. 1 mit geöffneter Abdeckhaube und
- Fig. 3: einen Blick axial in das Innere der Trommel.

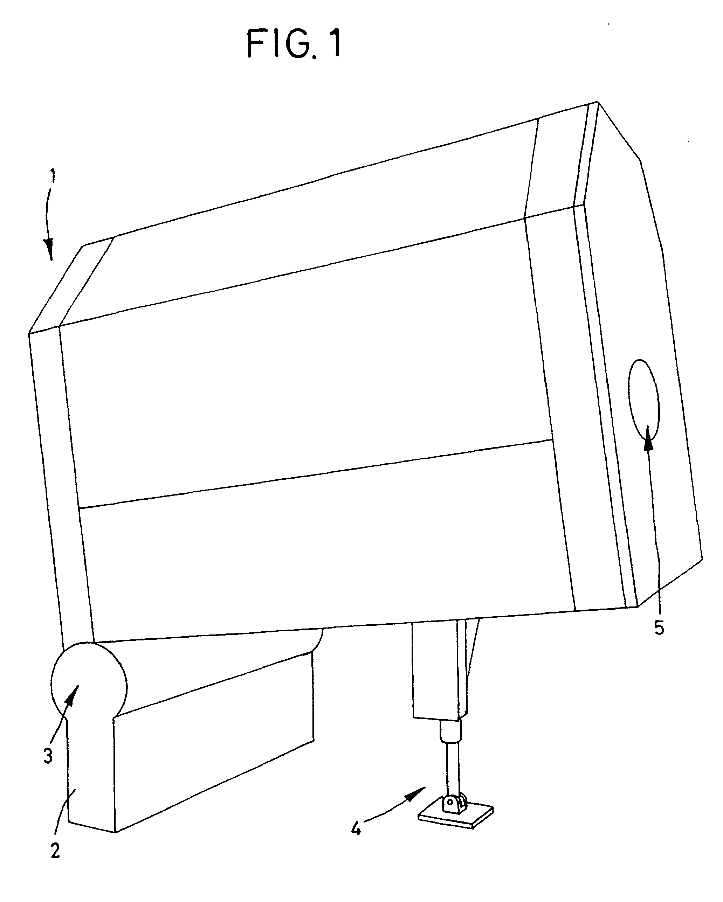

In Fig. 1 ist allgemein mit 1 eine Vorrichtung bezeichnet, die als "Trommelcoater" bezeichnet wird. Die Vorrichtung 1 weist einen Standfuß 2 auf, an dem sie um eine Kippachse 3 kippbeweglich angeordnet ist. Die Kippbewegung wird durch eine hydraulisch teleskopierbare Stütze 4 ermöglicht . Eine Einlaßöffnung 5 ist stimseitig an der Vorrichtung 1 vorgesehen; sie dient auch als Auslaßöffnung.

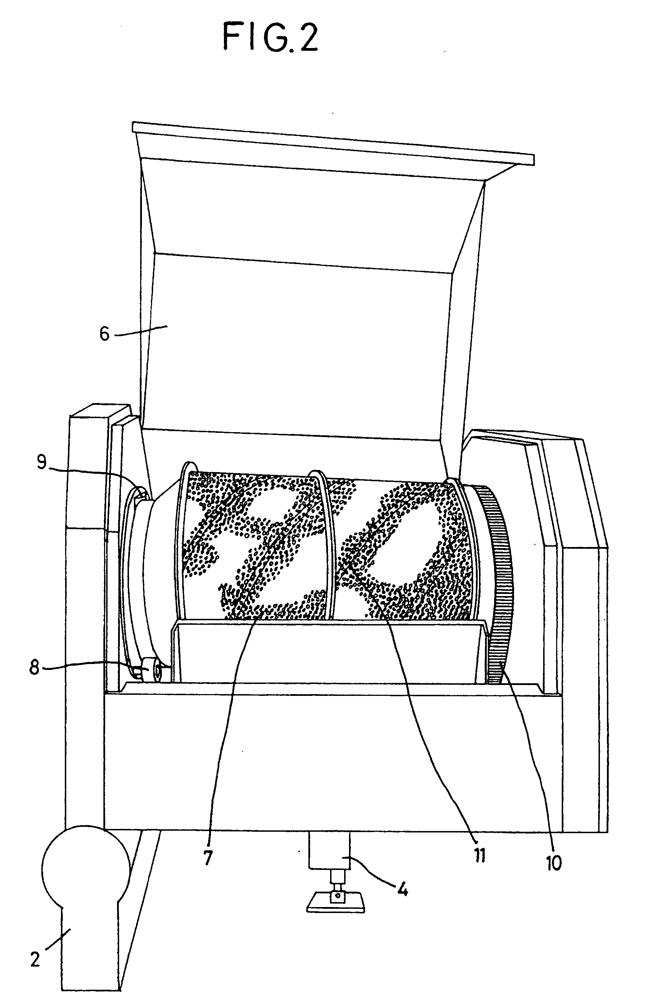

Aus Fig. 2 ist ersichtlich, daß die Vorrichtung eine aufschwenkbare Abdeckhaube 6 aufweist, unter der eine Trommel 7 vorgesehen ist. Mit ihrem einen Ende liegt die Trommel 7 auf Rollen 8 auf, wobei auch stirnseitig Anschlagrollen 9 vorgesehen sind. An ihrem anderen Ende weist die Trommel 7 einen Zahnkranz 10 auf, über den die Trommel rotatorisch antreibbar ist.
Die Trommel 7 ist entlang ihrem zylindrischen Umfang aus einem durchlässigen Material, beispielsweise aus einem Lochblech gefertigt. Erste Mitnehmer 11 sind als ein- oder mehrgängige Wendel vorgesehen und unmittelbar an der Trommelwandung befestigt.

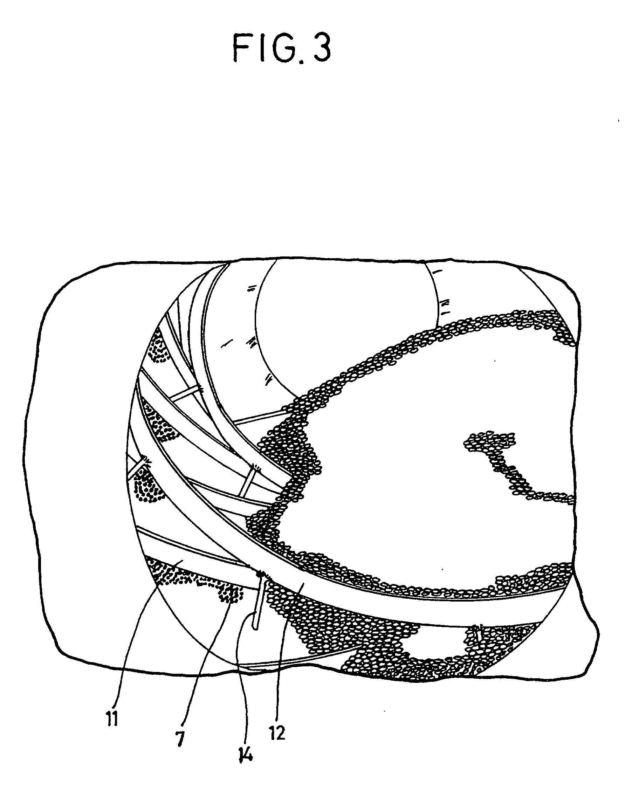

Aus Fig. 3 ist ersichtlich, daß zusätzlich zu den ersten Mitnehmern 11 zweite Mitnehmer 12 vorgesehen sind, die ebenfalls als Wendel ausgestaltet sind, deren Steigung jedoch entgegengesetzt zu der der Mitnehmer 11 verläuft. Die zweiten Mitnehmer 12 sind auf Stegen 14 im Abstand von der Trommelwandung befestigt und liegen daher radial innerhalb der ersten Mitnehmer 11.

## Patentansprüche

1. Vorrichtung zum Aufbringen einer Oberflächenschicht auf Kerne,
mit einer drehbar gelagerten Trommel zur Aufnahme der Kerne,
wobei die Trommel als länglicher Zylinder mit einer axialen Länge ausgestaltet ist, die größer ist als es dem Durchmesser der Trommel entspricht,
und mit wenigstens einer Sprühdüse zum Auftrag des Oberflächenmaterials auf die Kerne,
und mit einer Heizeinrichtung für den Innenraum der Trommel,
und mit einer Einlaß- und einer Auslaßöffnung,
sowie mit in der Trommel angeordneten Mitnehmern für die Kerne,
wobei diese Mitnehmer bei in Drehung befindlicher Trommel die Kerne in axialer Richtung der Trommel fördern,
**dadurch gekennzeichnet,**
**daß** zweite Mitnehmer (12) für die Kerne vorgesehen sind, die radial gegenüber den ersten Mitnehmern (11) versetzt angeordnet sind und die die Kerne in einer zu den ersten Mitnehmem (11) entgegengesetzten Richtung fördern.

2. Vorrichtung nach Anspruch 1, **dadurch gekennzeichnet, daß** die Trommel (7) kippbeweglich gelagert ist und in einer gegenüber der Horizontalen schrägstehenden Anordnung ihrer Längsachse antreibbar ist.

3. Vorrichtung nach Anspruch 2, **dadurch gekennzeichnet, daß** die ersten Mitnehmer (11) aufwärtsfördernd angeordnet sind und radial außerhalb von den zweiten Mitnehmern (12) angeordnet sind.

4. Vorrichtung nach einem der vorhergehenden Ansprüche, **dadurch gekennzeichnet, daß** zwei oder mehr Trommeln (7) axial hintereinander vorgesehen sind, wobei verschließbare Passagen zwischen je zwei benachbarten Trommeln (7) vorgesehen sind.

## Claims

1. Apparatus for applying a coating to kernels,
with a rotatably mounted drum to receive the kernels,
the drum being configured as an elongated cylinder with an axial length greater than the diameter of the drum,
and with at least one spray nozzle for applying coating material on to the kernels,
and with a heating device for the interior of the drum,
and with an inlet opening and an outlet opening,
and also with kernel stirrers arranged inside the drum,
these stirrers conveying the kernels in the axial direction of the drum when the drum is in rotation,
**characterized in that**
second kernel-stirrers (12) are provided which are radially offset with respect to the first stirrers (11) and which convey the kernels in the opposite direction to the first stirrers (11).

2. Apparatus according to Claim 1, **characterized in that** the drum (7) is tiltably mounted, and is drivable in an arrangement of its longitudinal axis that is inclined with respect to horizontal.

3. Apparatus according to Claim 2, **characterized in that** the first stirrers (11) are arranged so as to convey in the forwards direction, and are arranged radially outside the second stirrers (12).

4. Apparatus according to any one of the preceding claims, **characterized in that** two or more drums (7) are provided axially one after the other, closable passages being provided between adjacent drums (7).

## Revendications

1. Dispositif pour l'application d'une couche d'enduction sur des noyaux, comportant un tambour supporté avec possibilité de rotation qui reçoit les noyaux, lequel tambour est conçu comme un cylindre allongé ayant une longueur axiale plus grande que son diamètre, avec au moins une buse de pulvérisation pour l'application du matériau d'enduction sur les noyaux, et avec un dispositif pour le chauffage de l'intérieur du tambour, avec une ouverture d'entrée et une ouverture de sortie, et avec des entraîneurs pour les noyaux disposés dans le tambour, lesquels entraîneurs déplacent les noyaux dans le sens axial du tambour lorsque ce dernier est en rotation, **caractérisé en ce qu'**il est prévu des deuxièmes entraîneurs (12) décalés dans le sens radial par rapport aux premiers entraîneurs (11), qui transportent les noyaux dans une direction opposée aux premiers entraîneurs (11).

2. Dispositif selon la revendication 1, **caractérisé en ce que** le tambour (7) est supporté de manière à pouvoir basculer et peut être entraîné de façon à amener son axe longitudinal dans une position oblique par rapport à l'horizontale.

3. Dispositif selon la revendication 2, **caractérisé en ce que** les premiers entraîneurs (11) sont disposés de manière à réaliser un transport vers le haut et sont disposés à l'extérieur dans le sens radial par rapport aux deuxièmes entraîneurs (12).

4. Dispositif selon l'une des revendications précédentes, **caractérisé en ce que** deux ou plusieurs tambours (7) sont prévus l'un derrière l'autre dans le sens axial, des passages pouvant être fermés étant prévus entre chaque paire de tambours (7) voisins.
